# EUROPÄISCHE PATENTANMELDUNG

(11) **EP 2 143 671 A1**
(43) Veröffentlichungstag der Anmeldung: **13.01.2010**
(21) Anmeldenummer: 09008847.7
(22) Anmeldetag: 07.07.2009
(51) Int. Cl.: B65G 47/08, B65G 47/31, B65B 35/44

(54) **Paketierungsvorrichtung**

(30) Priorität: 07.07.2008 DE 202008009029 U
(71) Anmelder: NKT Holzoptimierung GmbH & Co. KG, 75031 Eppingen (DE)
(72) Erfinder: Purschke, Günter, 75031 Eppingen (DE)
(74) Vertreter: Schön, Thilo

(57) **Zusammenfassung**

Es wird eine Paketiervorrichtung zur Bildung von Schnittholzpaketen beschrieben. Diese Paketiervorrichtung umfasst eine Aufstaueinheit mit einem in eine erste Horizontalrichtung antreibbaren Aufstauförderer und eine der Aufstaueinheit nachgeordnete Paketiereinheit mit einem in der ersten Horizontalrichtung antreibbaren Paketierförderer und einem mit dem Paketierförderer verbundenen oder parallel zum Paketierförderer antreibbaren Anschlag. Im Übergangsbereich zwischen Aufstaueinheit und Paketiereinheit ist ein Unterbrecher und ein optischer Sensor (29) angeordnet. Hierbei sind Aufstauförderer und Paketierförderer in Ihrer Höhe versetzt und/oder haben unterschiedliche Neigungswinkel gegen die Horizontale und/oder laufen während der Bildung eines Paketes mit unterschiedlichen Geschwindigkeiten. Hierdurch bildet sich ein Spalt zwischen den von der Aufstaueinheit zur Paketiereinheit übergehenden Brettern, der vom optischen Sensor leicht detektiert werden kann (Fig. 7).

## Beschreibung

Die Erfindung betrifft eine Paketierungsvorrichtung für Schnitthölzer nach Anspruch 1.

Bei der Verarbeitung von Schnitthölzern, beispielsweise mit sogenannten Keilzinkanlagen, besteht häufig die Notwendigkeit, Schnitthölzer, die auf ihrer Breitseite liegend auf einem Förderer angefördert werden, in Pakete gleicher Schnittholzanzahl zusammenzufassen, wobei die Schnitthölzer in den Schnittholzpaketen auf einer ihrer beiden Längsseiten stehen. Es sind aufwendige und sehr teure vollautomatische Paketierungsvorrichtungn bekannt, die diese Aufgabe ausführen.

Häufig sind eine oder mehrere Personen vorgesehen, die den Strom der noch liegenden Schnitthölzer überwachen, um Schnitthölzer mit Fehlern auszusortieren, bevor diese paketiert werden. Diese Personen haben bei vielen Anlagen mit vollautomatischen Paketierungen weiterhin die Aufgabe, die Schnitthölzer auf einem Zuführband für die Paketierungsvorrichtung relativ genau zu positionieren.

Die vorliegende Erfindung stellt sich die Augfabe, eine Paketierungsvorrichtung zur Verfügung zu stellen, die mechanisch und regelungstechnisch relativ einfach und damit kostengünstig und dennoch zuverlässig ist.

Diese Aufgabe wird durch eine Paketierungsvorrichtung mit den Merkmalen des Anspruchs 1 gelöst.

Die Erfindung geht zunächst von dem Gedanken aus, dass es für das Bedienpersonal keine zusätzliche Belastung darstellt, die angeförderten Schnitthölzer von ihrer Breitseite auf ihre Längsseite zu drehen, statt sie auf ihrer Breitseite liegend relativ genau positionieren zu müssen. Die erfindungsgemäße Paketierungsvorrichtung paketiert deshalb Schnitthözer, die bereits auf ihrer Längsseite stehend angefördert werden.

Die Paketiervorrichtung weist eine Aufstaueinheit mit einem in einer ersten Richtung antreibbaren Aufstauförderer eine der Aufstaueinheit nachgeordnete Paketiereinheit auf. Die Paketiereinheit umfasst einen Paketierförderer, welcher in horizontaler Richtung parallel zum Aufstauförderer ist und in dieser Richtung unabhängig vom Aufstauförderer antreibbar ist. Weiterhin weist die Paketiereinheit wenigstens einen Anschlag auf, welcher parallel zum Paketierförder bewegbar oder mit diesem gekoppelt ist.

Aufstauförderer und Paketierförderer sind bezüglich ihrer Höhe und/oder bezüglich ihres Neigungswinkels gegen die Horizontale zueinander versetzt und/oder laufen mit unterschiedlichen Geschwindigkeiten, so dass beim Übergang von der Aufstaueinheit zur Paketiereinheit ein Spalt oder ein Versatz zwischen Schnitthölzern auftritt, welcher mit einem optischen Detektor problemlos detektiert werden kann, so dass die Schnitthölzer leicht gezählt werden können. Hat eine vorbestimmte Anzahl von Schnitthölzern die Paketierungseinrichtung erreicht, so wird ein sich im Übergangsbereich zwischen Aufstaueinheit und Paketiereinheit befindender Unterbrecher betätigt, so dass der Strom von Schnitthölzern auf die Paketiereinheit so lange unterbrochen wird, bis das Paket, welches sich auf der Paketiereinheit gebildet hat, abtransportiert ist.

Die Vorrichtung umfasst nur einfache mechanische und messtechnische Bauteile und kann deshalb relativ kostengünstig ausgeführt werden, ohne auf eine sehr hohe Funktionssicherheit verzichten zu müssen.

Die Vorrichtung arbeitet auch dann zuverlässig, wenn die Dicke der Schnitthölzer schwankt, da jedes von der Aufstaueinheit auf die Paketiereinheit übergehende Brett einzeln gezählt wird. Die Vorrichtung erzeugt somit einerseits stets Schnittholzpakete mit der vorgegebenen Schnittholzanzahl, weiterhin ist sichergestellt, dass der Unterbrecher exakt gesteuert wird.

Ein weiterer Vorteil der Erfindung ist, dass die Vorrichtung der Person, welche die ihr zugeführten Schnitthölzer vorbereitet, keinen festen Takt vorgibt, da auf der Aufstaueinheit in der Regel ein Puffer von zahlreichen aufgestauten Schnitthölzern vorhanden ist. Dies führt zu einer Entlastung für die an der Vorrichtung arbeitenden Menschen.

Die Vorrichtung benötigt keine seitlichen Führungen.

Bevorzugte Ausführungsbeispiele und weitere Vorteile der Erfindung werden durch die nachfolgende Erläuterung der bevorzugten Ausführungsbeispiels deutlich.

Die Erfindung wird nun anhand von Ausführungsbeispielen mit Bezug auf die Figuren näher erläutert. Hierbei zeigen:
- Figur 1: eine schematisierte Draufsicht auf eine sich im Betrieb befindende Paketierungsvorrichtung,
- Figur 2: einen Teil des in Figur 1 Gezeigten, jedoch ohne Schnitthölzer,
- Figur 3: das in Figur 2 Gezeigte in einer seitlichen Ansicht aus Richtung A,
- Figur 4: das in Figur 3 Gezeigte in einem ersten Betriebszustand,
- Figur 5: das in Figur 4 Gezeigte in einem zweiten Betriebszustand,
- Figur 6: das in Figur 5 Gezeigte in einem dritten Betriebszustand,
- Figur 7: das in Figur 6 Gezeigte in einem vierten Betriebszustand,
- Figur 8: das in Figur 7 Gezeigte in einem fünften Betriebszustand,
- Figur 9: das in Figur 8 Gezeigte in einem sechsten Betriebszustand,
- Figur 10: den Übergang zwischen Aufbaueinheit und Paketiereinheit mit realistischen Größenverhältnissen.
- Figur 11: eine Detaildarstellung einer Anschlagrolle mit zugehöriger Antriebs-Rolle,
- Figur 12: das in Figur 11 Gezeigte, wenn Anschlagrolle und Antriebsrolle in Kontakt zueinander stehen,
- Figur 13: das in Figur 11 Gezeigte aus Blickrichtung B,
- Figur 14: eine stark schematisierte Seitenansicht eines zweiten Ausführungsbeispiels,
- Figur 15: das in Figur 14 Gezeigte aus Richtung F,
- Figur 16: ein drittes Ausführungsbeispiel der Erfindung in einer der Figur 7 entsprechenden Darstellung,
- Figur 17: eine Detailansicht eines Übergangsbereichs zwischen Aufstaueinheit und Paketiereinheit und
- Figur 18: das in Figur 17 Gezeigte bei angehobenen Schnitthölzern.

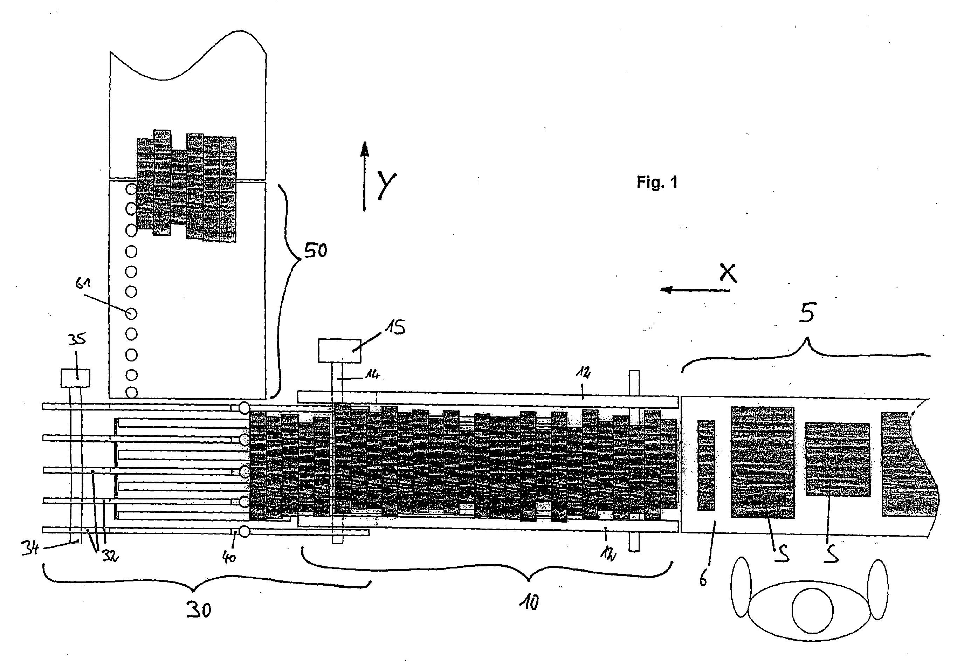

Für das folgende gelten folgende Definitionen: Erste Horizontalrichtung ist die in Figur 1 gezeigte X-Richtung; zweite Horizontalrichtung ist die in Figur 1 gezeigte Y-Richtung. Unter "in Horizontalrichtung parallel zueinander" wird verstanden, dass die X- und/oder Y-Komponenten zweier Bauteile oder zweier Bewegungen parallel zueinander sind. Unter "parallel" wird vollständig parallel, also in allen drei Raumrichtungen verstanden.

### Erstes Ausführungsbeispiel

Zunächst wird der grundsätzliche Aufbau der Anlage mit Bezug auf die Figur 1 erläutert, wobei die Figur 1 die Anlage im Betrieb zeigt. Die Anlage dient dazu, quaderförmige Schnitthölzer S, welche mittels einer Zuführ-Einheit 5 auf ihrer Breitseite liegend angefördert werden, zu Paketen mit konstanter SchnittholzAnzahl zusammenzufassen, wobei die in einem Paket zusammengefassten Schnitthölzer auf ihrer Längsseite stehen. Hierbei gelten folgende Definitionen: Breitseiten sind diejenigen Seiten des Schnittholzes, welche die größte Fläche aufweisen, Stirnseiten sind diejenigen Seiten des Schnittholzes, welche die geringsten Fläche aufweisen und Längsseiten sind diejenigen Seiten, welche eine Fläche aufweisen, die zwischen der Fläche der Breitseiten und der Fläche der Stirnseiten liegen.

Wie bereits erwähnt, werden Schnitthölzer S auf ihrer Breitseite, also liegend, angefördert, wozu eine Zuführ-Einheit 5 dient, welche im wesentlichen aus einem Zuführband 6 besteht. Die Schnitthölzer werden nun manuell in eine auf einer Längsseite stehende Position gebracht und grob zentriert. Während dieses Arbeitsschrittes können weiterhin Schnitthölzer, welche Mängel aufweisen, aussortiert werden.

In dieser stehenden Position gelangen die Schnitthölzer auf die Aufstau-Einheit 10. Diese weist eine Mehrzahl (im dargestellten Ausführungsbeispiel fünf) von sich in X-Richtung erstreckenden Aufstausträngen in Form von Aufstau-Bändem 12 auf, welche über mit einer ersten Antriebsachse 14 kraftschlüssig verbundene Antriebsräder 16 angetrieben werden. Die Gesamtheit der Auflaufbänder 12 bilden den Aufstauförderer. Die Antriebsachse 14 ist mit dem ersten Antriebsmotor 15 verbunden.

An die Aufstau-Einheit 10 schließt sich die Paketier-Einheit 30 an, wobei sich, wie man später sehen wird, Aufstau-Einheit 10 und Paketier-Einheit 30 überlappen. Die Paketier-Einheit 30 weist mehrere Paketierungsstränge in Form von Ketten 22 (im vorliegenden Ausführungsbeispiel fünf) auf, wobei sich die Ketten 22 in die gleiche Horizontalrichtung wie die Aufstau-Bänder 12 der Aufstau-Einheit 10 erstrecken. Im vorliegenden Ausführungsbeispiel sind die Ketten sogar vollständig parallel zu den Aufstaubändern. Die Gesamtheit der Ketten 32 12 bilden den Paketierförderer. Aufstaubänder 12 und Ketten 32 sind gegen die Horizontale um den Winkel α geneigt. Jede der Ketten 22 trägt eine Anschlagrolle 30.

Zur Bildung eines Schnittholzstapels werden die Ketten 32 über ihre Antriebszahnräder 36, welche kraftschlüssig auf einer zweiten Antriebsachse 34 befestigt sind, angetrieben. Zum Antrieb der zweiten Antriebsachse 34 dient der zweite Antriebsmoter 35. Während der Stapelbildung werden Schnitthölzer von der Aufstau-Einheit 10 nachgeschoben. Ist die Bildung eines Paketes abgeschlossen, so wird der Schnittholztransport von der Aufstau-Einheit 10 zur Paketier-Einheit 30 unterbrochen und der gebildete Stapel wird mittels eines mehrere Querrollen 42 aufweisenden Querförderers 40 in Y-Richtung zu einer ein Abfuhr-Band 52 aufweisenden Abfuhr-Einheit 50 gefördert. Die X- und Y-Richtungen stehen senkrecht zueinander.

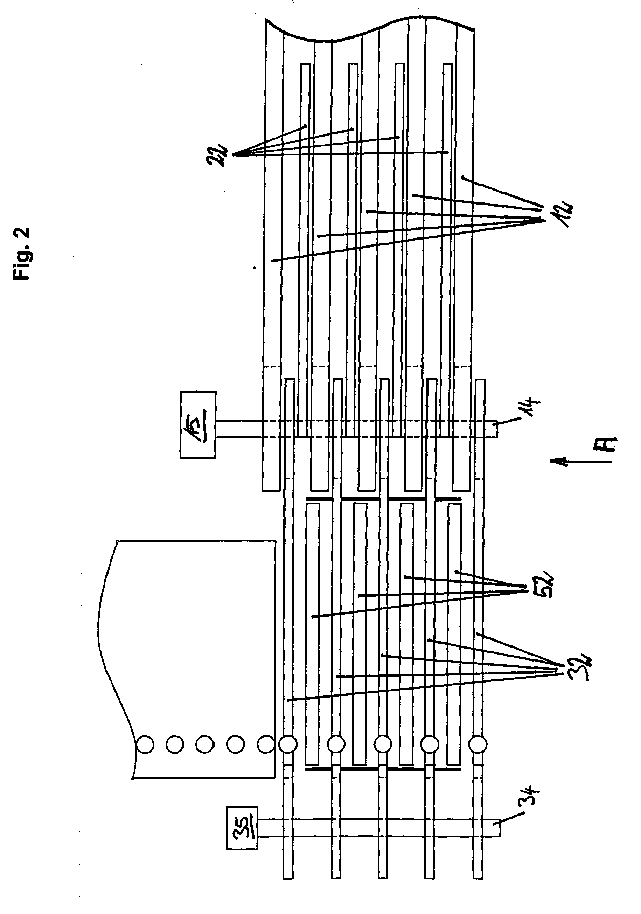

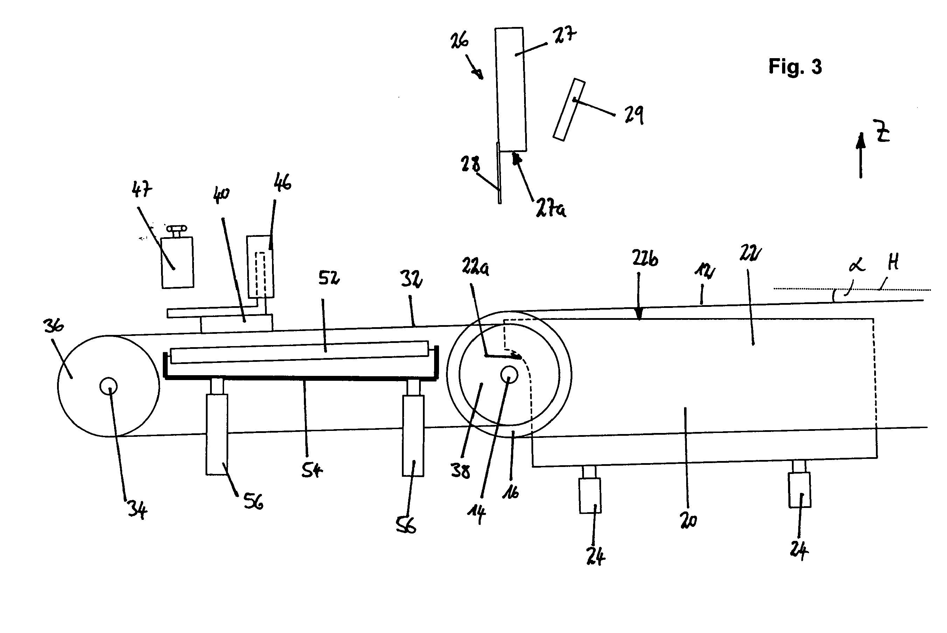

Aufstau-Einheit 10 und Paketier-Einheit 30 werden nun mit Bezug auf die Figuren 2, 3 und 4 näher beschrieben, wobei die Figur 2 ein Ausschnitt aus der Figur 1, jedoch ohne Schnitthölzer und die Figur 3 eine Seitenansicht des in Figur 2 Gezeigten aus Richtung A ist. Es ist zu betonen, dass insbesondere die Figur 3 nicht maßstäblich ist, um wichtige Details besser darstellen zu können.

Wie bereits erwähnt, weist die Aufstau-Einheit 10 mehrere zueinander parallele Aufstau-Bänder 12 auf, wobei jedem dieser Aufstau-Bänder 12 ein Antriebsrad 16 zugeordnet ist, und die Antriebsräder 16 starr mit einer ersten Antriebsachse 14 verbunden sind, so dass sich die Aufstau-Bänder 12 synchron zueinander bewegen. Die erste Antriebsachse 14 wird von einem ersten Antriebsmotor 15 angetrieben.

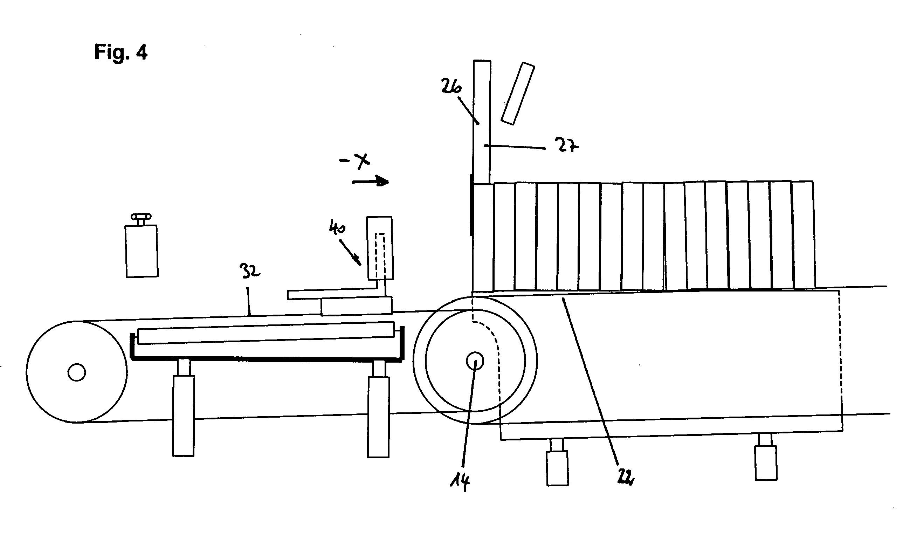

Die Aufstau-Einheit 10 weist weiterhin eine Anhebe-Einrichtung 20 mit mehreren - im vorliegenden Ausführungsbeispiel vier - Anhebe-Elementen 22 auf. Diese Anhebe-Elemente 22 erstrecken sich in Horizontalrichtung parallel zu den Aufstau-Bändern 12, wobei sich die Oberseiten der Anhebe-Elemente 22 bis auf die X-Position der ersten Antriebsachse 14 erstrecken, wie man dies insbesondere der Figur 3 entnimmt. Hierzu ist ein Abschnitt der Vorderseite 22a der Anhebe-Elemente 22 konkav ausgeführt. Die Anhebe-Elemente 22 sind miteinander gekoppelt und durch eine Anhebe-Einrichtung in Z-Richtung bewegbar. Hierbei zeigt die Figur 3 die untere Stellung, während bspw. die Figur 4 die obere Stellung zeigt. Die Anhebe-Einrichtung ist im vorliegenden Ausführungsbeispiel mittels zwei Kolben-Zylinder-Einheiten 24 ausgebildet. Es kann jedoch beispielsweise auch ein Exzenterantrieb vorgesehen sein. Die Aufstau-Bänder 12 laufen schräg nach unten mit einem Winkel von vorzugsweise 1-5 Grad gegen die Horizontale H. Die Oberseiten 22b der Anhebe-Elemente 22 erstrecken sich horizontal.

Oberhalb der vorderen Kante der Anhebe-Elemente 22 befindet sich ein vertikal bewegbarer Unterbrecher 26. Dieser weist einen Stempel 27 mit einer horizontal verlaufenden Stempelfläche 27a und ein sich vom Stempel 27 nach unten erstreckendes Anschlagblech 28 auf. Die Stempelfläche 27a und die Oberseite 22b der Anhebe-Elemente 22 stehen parallel zueinander. Der Unterbrecher 26, welche der Übersichtlichkeit halber in den Figuren 1 und 2 nicht dargestellt ist, erstreckt sich über die gesamte Breite der Aufstau-Einheit 10. Weiterhin ist ein optischer Sensor 29 vorhanden, welcher auf die Schnitthölzer im Bereich des Unterbrechers "blickt". Im gezeigten Ausführungsbeispiel ist dieser Sensor oberhalb der Schnitthölzer angeordnet, eine seitliche Anordnung oder eine Messung von unten wäre jedoch ebenso möglich. Der optische Sensor kann beispielsweise als CCD-Kamera, als Laserscanner, als Lichtschranke oder als Lichttaster ausgebildet sein.

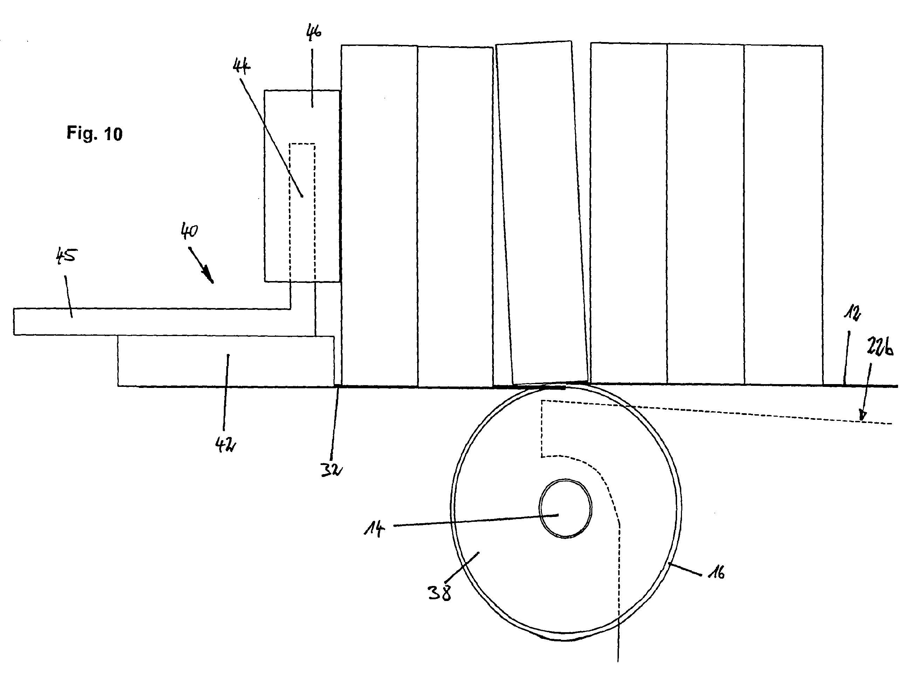

An die Aufstau-Einheit 10 schließt sich die Paketier-Einheit 30 an. Diese weist mehrere - hier fünf - zueinander parallel laufende Ketten 32 auf. Auch hier verlaufen die Oberflächen der Ketten leicht schräg gegen die Horizontale, vorzugsweise im selben Winkel wie die Aufstau-Bänder 12. Die Antriebszahnräder 36 befinden sich an der Aufstau-Einheit 10 abgewandten Ende der Paketier-Einheit 30. Die Antriebzahnräder 38 sind kraftschlüssig mit einer zweiten Antriebsachse 34 verbunden, so dass die Ketten 32 synchron angetrieben werden. Auf der Seite der Aufstaueinheit sind die Ketten über mitlaufende Zahnräder 36 an der ersten Antriebsachse 14 freidrehend angeordnet, so dass sich die Aufstau-Bänder 12 und die Ketten 32 überlappen aber unabhängig voneinander bewegt werden können. Der Durchmesser der mitlaufenden Zahnräder 38 ist kleiner gewählt als der Durchmesser der Antriebsräder 16, so dass die Ketten gegenüber den Aufstau-Bändem 12 nach unten versetzt sind. Der Versatz beträgt vorzugsweise zwischen 2 und 10 mm und ist in Figur 3 deutlich übertrieben dargestellt. Eine realistischere Darstellungder Größenverhältnisse findet sich in Figur 10.

Die Paketiereinheit weist weiterhin einen Querförderer 50 auf. Dieser weist mehrere sich zwischen den Ketten und sich parallel zu diesen erstreckenden Querrollen 52 auf, deren Längsachsen sich parallel zu den Ketten 32 erstrekken. Die Querrollen 52 sind in einem gemeinsamen Rahmen 54 gehalten, der mittels einer zweiten Kolben-Zylinder-Einheit 56 vertikal bewegbar ist. Eine andere Hebeeinrichtung, beispielsweise in Form eines Exzenterantriebs, ist natürlich ebenso möglich. In angehobener Stellung des Querförderers 50 kann ein Schnittholzpaket in der zweiten Horizontalrichtung (Y-Richtung) zur ein Abfuhrband 62 aufweisenden Abfuhr-Einheit 60 gefördert werden.

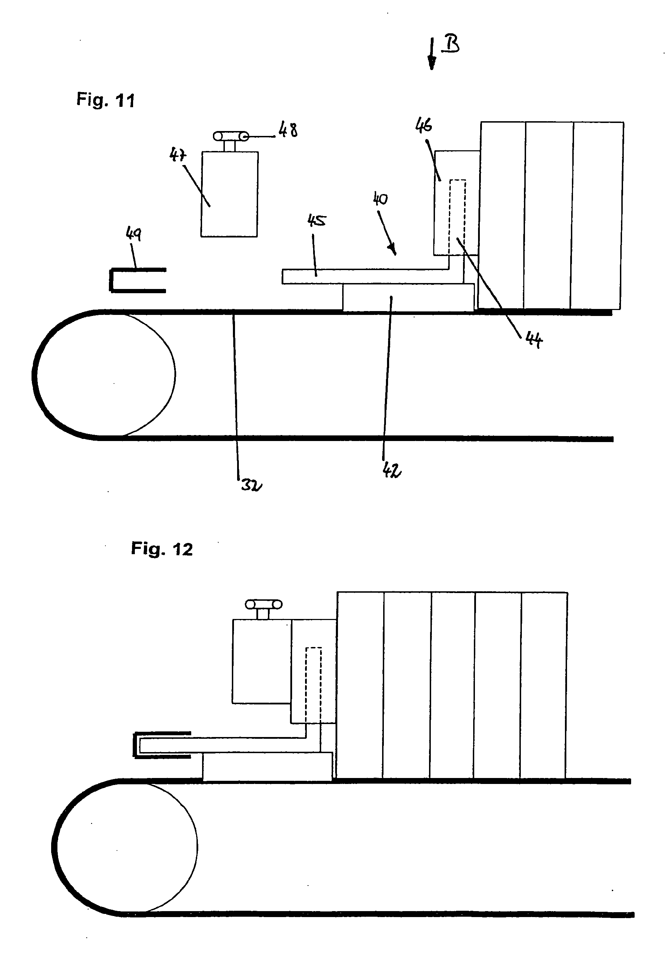

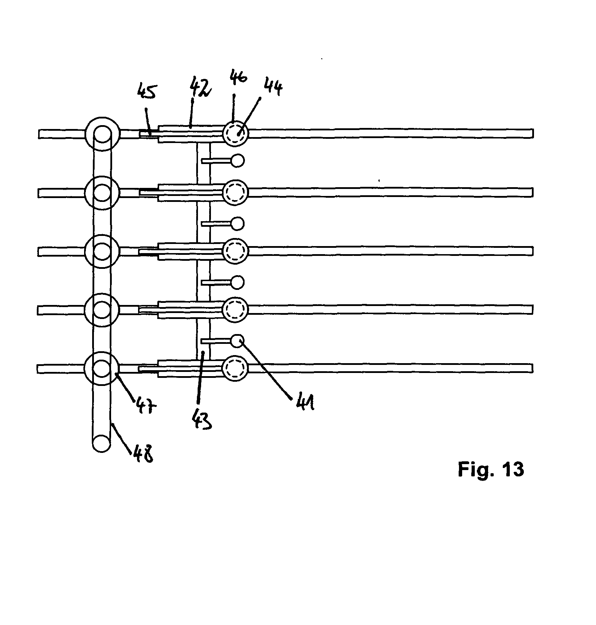

An jeder Kette 32 ist ein Anschlag 40 als Anschlag für das sich bildende Schnittholzpaket angeordnet, so dass sich jeder Anschlag 40 synchron mit seiner Kette 32 bewegt. Da sich alle Ketten synchron zueinander bewegen, bewegen sich auch die Anschläge parallel zueinander. Die Figuren 11 bis 13 zeigen in größerem Detail, wie die Anschläge 40 ausgebildet sind. Jede Kette trägt einen Halteblock 42, der auf der Kette 32 festgeklemmt oder anders mit dieser kraftschlüssig verbunden ist. Von diesem Halteblock erstreckt sich senkrecht eine starre Achse 44 und parallel zum Halteblock ein Bolzen 45. Auf die starre Achse 44 ist eine Zylinder-Hülse 46, welche eine Gummibeschichtung trägt, drehbar aufgesteckt, so dass sie sich um die starre Achse drehen kann. Am hinteren Ende der Paketiereinheit ist für jede Zylinderhülse 46 eine Antriebsrolle 47 ortsfest angeordnet. Die Antriebsrollen tragen vorzugsweise ebenfalls eine Gummibeschichtung. Die Antriebsrollen sind gemeinsam - im gezeigten Ausführungsbeispiel über einen Riemen 48 - antreibbar. Befinden sich die Anschläge 40 in ihrer hinteren Endposition, so liegt jede Zylinderhülse 46 an der ihr zugeordneten Antriebsrolle 47 an und wird von einer sich drehenden Antriebsrolle ebenfalls in Rotation versetzt. In dieser Position befindenden sich die Bolzen 45 in zugeordneten Buchsen 49, wodurch der betreffende Anschlag stabilisiert wird.

Die Halteblöcke 42 sind mittels eines Steges 43 miteinander verbunden. An diesem Steg 43 ist zwischen jeweils zwei Zylinderhülsen 46 eine Zwischenrolle 41 angeordnet, welche nicht antreibbar ist. Diese Zwischenrollen 41 dienen dazu, dass auch sehr kurze Schnitthölzer sicher in Y-Richtung transportiert werden können.

Im gezeigten Ausführungsbeispiel sind die Förderstränge der Aufstaueinheit (Aufstaubänder 12) und die Förderstränge der Paketiereinheit (Ketten 32) vollständig parallel zueinander. Sie sind jeweils um einen Winkel α gegen die Horizontale geneigt, wobei dieser Winkel α vorzugsweise zwischen 1° und 5° Grad beträgt. Wärend die Parallelität in Horizontalrichtung zwingend ist, ist die exakte Parallelität in Vertikalrichtung nicht zwingend. Es könnte in manchen Ausführungsformen vorteilhaft sein, dass die Förderstränge der Aufstaueinheit stärker gegen die Horizontale geneigt sind als die Förderstränge der Paketiereinheit oder umgekehrt. Wie man anhand der nachfolgend beschriebenen Funktionsweise der Anlage jedoch sehen wird, ist es in jedem Fall zu bevorzugen, dass die Förderstränge der Aufstaueinheit gegen die Förderstränge der Paketiereinheit in ihrer vertikalen Position und/oder in ihrem Neigungswinkel gegen die Horizontale zueinander versetzt sind.

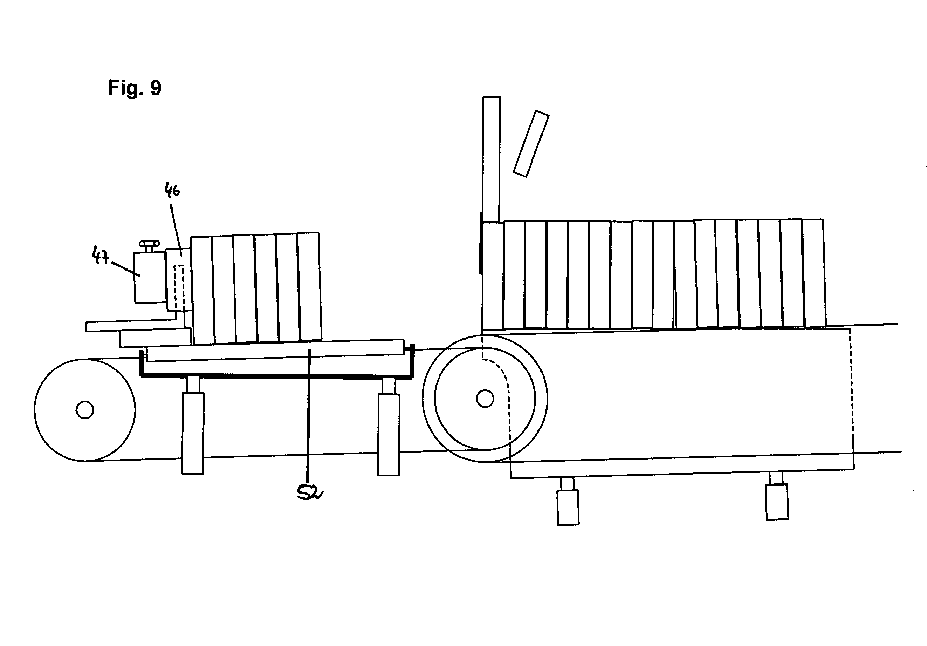

Die Funktionsweise der Vorrichtung wird nun mit Bezug auf die Figuren 4 bis 9 näher erläutert:
Die Figur 4 zeigt einen ersten Betriebszustand. In diesem Betriebszustand sind die Anhebe-Elemente 22 angehoben und der Unterbrecher 26 ist abgesenkt. Hierdurch ist das vorderste Schnittholz zwischen den Oberseiten 26b der Anhebeelemente 22 und der Stempelfläche 27c des Stempels 27 klemmen gehalten. Weiterhin wird das vorderste Schnittholz durch das Anschlagblech 28 gehalten. Die erste Antriebsachse 14 wird permanent angetrieben, so dass durch Reibung zwischen den hinteren Schnitthölzern und den Aufstaubändern 12 die Schnitthölzer gegen den Unterbrecher 26 aufgestaut werden. In diesem Betriebszustand werden die Ketten 32 der Paketiereinheit in -X-Richtung angetrieben, so dass die Anschläge 40 in Richtung der Aufstaueinheit bis zu ihrer vorderen Endposition gefahren werden.

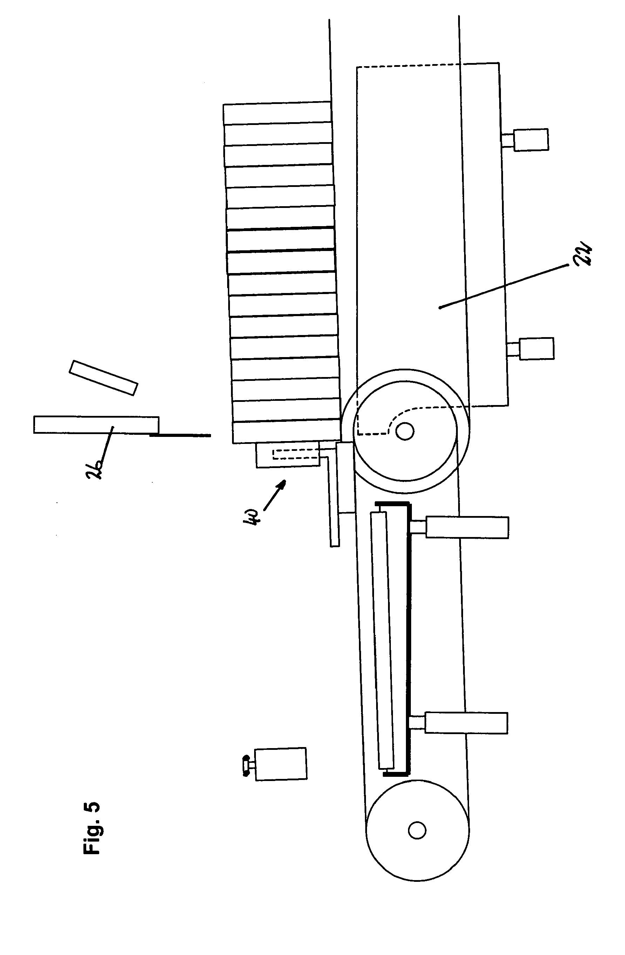

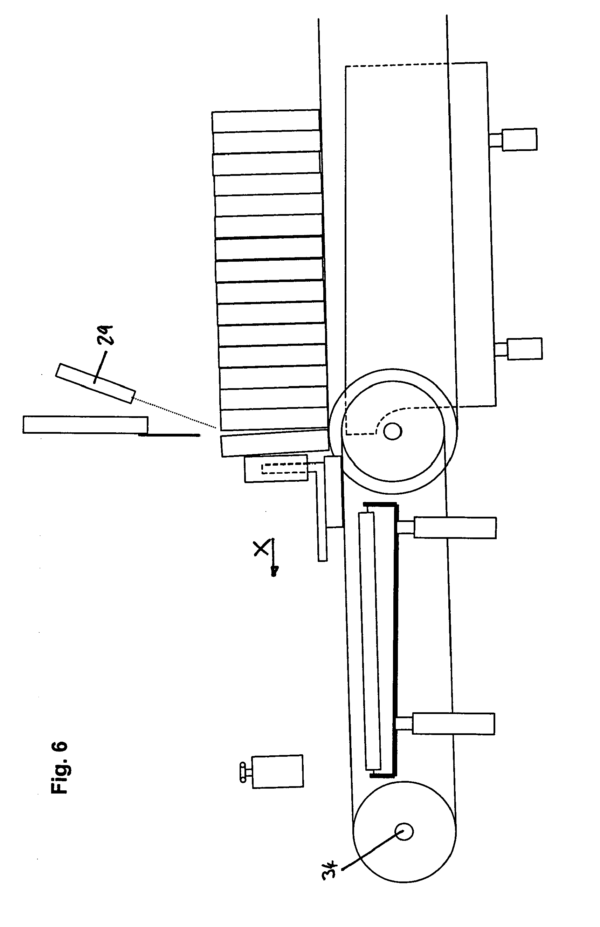

Haben die Anschlagrollen ihre vordere Position erreicht, so werden die Anhebelemente 22 abgesenkt und der Unterbrecher angeheoben (Fig. 5), so dass sich die aufgestauten Schnitthölzer in X-Richtung bewegen können und sich zunächst das vorderste Schnittholz in X-Richtung bewegt, bis es in Kontakt mit den Anschägen 40 kommt. Hierbei führt es aufgrund des Höhenversatzes zwischen den Aufstaubändern 12 und den Ketten 32 eine leichte Kippbewegung durch. Durch diese Kippbewegung entsteht ein Spalt zwischen dem von der Aufstaueinheit an die Paketierungseinheit übergeben und dem nachfolgenden Schnittholz (Fig. 6). Dieser Spalt kann vom optischen Sensor 29 leicht registriert werden. Die zweite Antriebsachse 34 wird angetrieben, so dass sich die Anschläge 40 in X-Richtung bewegen. Die Geschwindigkeit ist hierbei so gewählt, dass die Schnitthölzer, welche sich bereits auf der Paketiereinheit befinden von den Schnitthölzern, welche sich noch auf der Aufstaueinheit befinden, im wesentlichen entkoppelt sind. Das heißt konkret, dass sich die Ketten während der Stapelbildung geringfügig schneller bewegen als die Aufstaubänder 12, oder dass die Anschläge zu Beginn der Paketbildung einen geringen "Vorsprung" erhalten. Zum Erreichen dieses Zustandes kann eine rein passive Steuerung oder eine aktive Regelung vorgesehen sein, welche beispielsweise die von den Schnitthölzern auf die Anschlagrollen ausgeübte Kraft mittels Sensoren misst und den zweiten Antriebsmotor 35 in Abhängigkeit der gemessenen Kraft ansteuert.

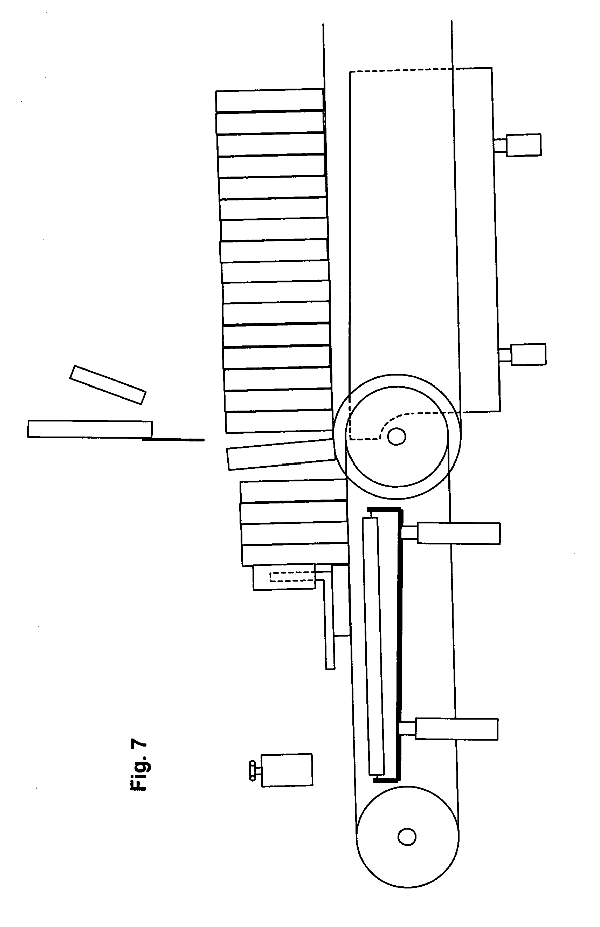

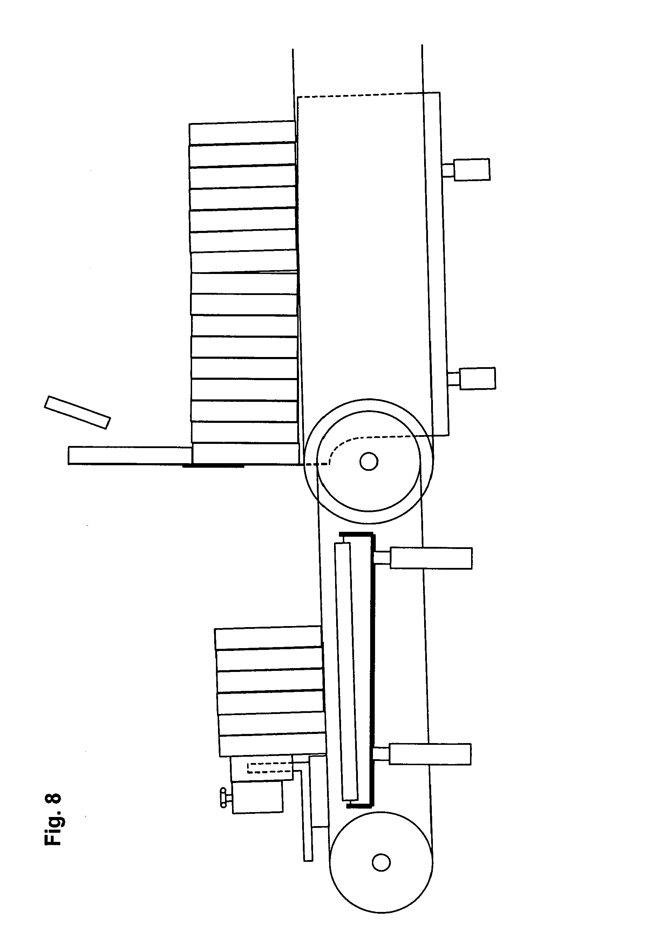

Der beschriebene Übergabevorgang von Schnitthölzern setzt sich wie beschrieben fort, während die Anzahl der von der Aufstaueinheit auf die Paketiereinheit übergebenen Schnitthölzer mittels des optischen Detektors wie oben beschrieben bestimmt und gezählt wird (Fig. 7). Ist eine vorbestimmte Anzahl an Schnitthölzern erreicht, so werden die Anhebeelemente 22 nach oben und der Unterbrecher 26 nach unten gefahren, so dass das vorderste Schnittholz zwischen den Anhebeelementen und dem Unterbrecher gehalten ist und die dahinterliegenden Schnitthölzer aufstaut. Hierbei befinden sind die direkt hinter dem vordersten Schnittholz liegenden Schnitthölzer nicht in Kontakt mit den Aufstaubändern (Fig. 8).

In diesem Zustand werden die Anschläge 40 in ihre hinterste Position gefahren und anschließend die Querrollen 52 angehoben. Durch Antrieb der Antriebsrollen 47 und somit auch der Zylinderhülsen 46 wird das Schnittholzpaket in Y-Richtung auf das Abfuhrband 62 bewegt, wo es durch Führungsrollen 61 geführt wird. Anschließend beginnt ein neuer Zyklus.

### Zweites Ausführungsbeispiel

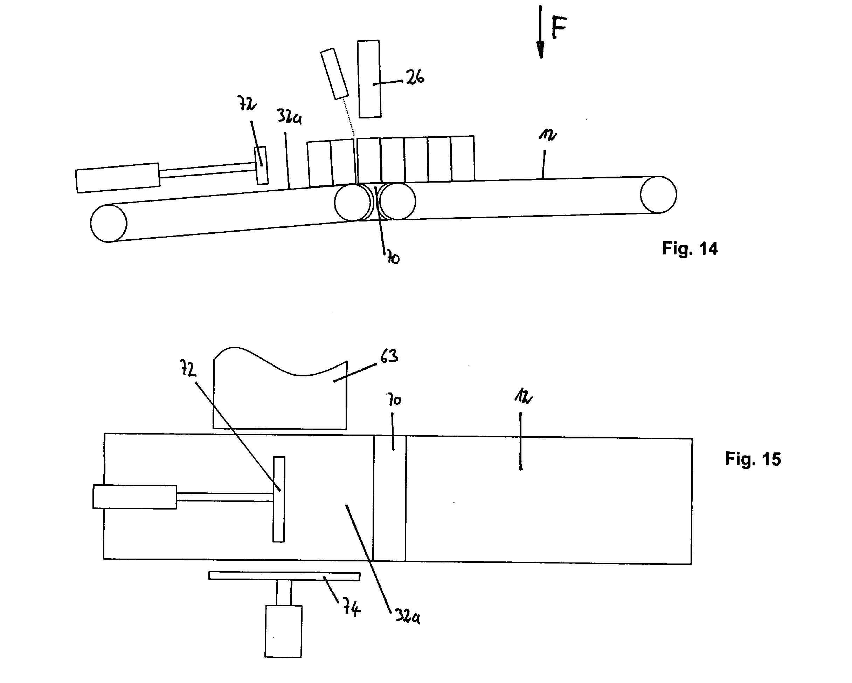

Die Figuren 14 und 15 zeigen ein zweites Ausführungsbeispiel, wobei die Figur 15 eine Draufsicht auf die Figur 14 aus Richtung F ist. Im Unterschied zum ersten Ausführungsbeispiel gibt es keine Anhebeeinrichtung, stattdessen ist im Übergangsbereich zwischen Aufstauband 12 und Paketierband 32a (es ist jeweils nur ein durchgehendes Band vorhanden) ein starres Übergangsteil 70 vorhanden, gegen das bei Unterbrechzung des Übergangs von der Aufstau-einheit zur Paketiereinheit das vorderste Schnittholz vom Unterbrecher 26 gestempelt wird. Weitere Unterschiede sind, dass der bewegliche Anschlag der Paketiereinheit als mittels einer Kolben-Zylinder-Einheit bewegbarer Anschlagschieber 72 ausgebildet ist. Die Querförderung erfolgt ebenfalls mittels eines Schiebers, nämlich mittels des Querschiebers 74. Der Versatz zwischen Aufstauband und Paketierband wir durch einen unterschiedlichen Neigungswinkel gegen die Horizontale erreicht.

### Drittes Ausführungsbeispiel

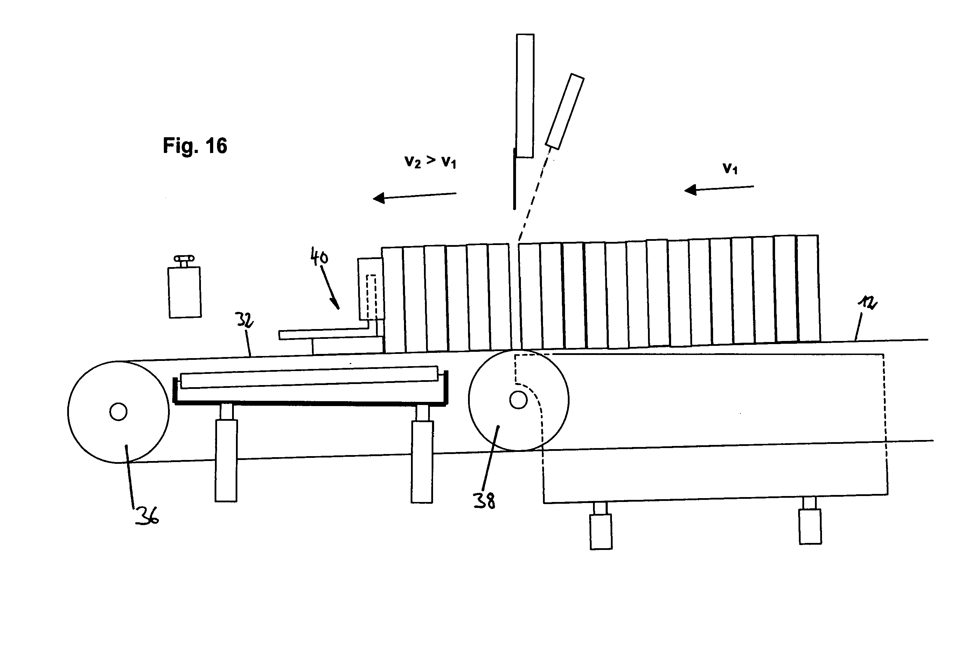

Die Figur 16 zeigt ein drittes Ausführungsbeispiel in einer der Figur 7 entsprechenden Darstellung. Dieses dritte Ausführungsbeispiel unterscheidet sich vom ersten Ausführungsbeispiel dadurch, dass die Durchmesser der Antriebsräder 16 und die der mitlaufenden Zahnräder 38 so gewählt sind, dass sich die Aufstaubänder 12 und die Ketten 32 auf der selben Höhe befinden. Hier haben die Förderstränge der Aufstaueinheit (Aufstaubänder 12) und die Förderstränge der Paketiereinheit (Ketten 32) also die selbe Höhe und den selben Neigungswinkel gegen die Horizontale. Der Spalt zwischen dem hintersten Schnittholz auf der Paketiereinheit und dem vordersten Schnittholz auf der Aufstaueinheit wird ausschließlich dadurch erzeugt, dass die Ketten 32 mit einer höheren Geschwindigkeit als die Aufstaubänder 12 angetrieben werden. Die Ketten 32 sind vorzugsweise gezahnt ausgeführt, so dass eine hohe Reibung zwischen den Ketten 32 und den Schnitthölzern herrscht und die Schnitthölzer beim Übergang von der Aufstaueinheit auf die Paketiereinheit sehr schnell auf die Geschwindigkeit der Ketten 32 beschleunigt werden.

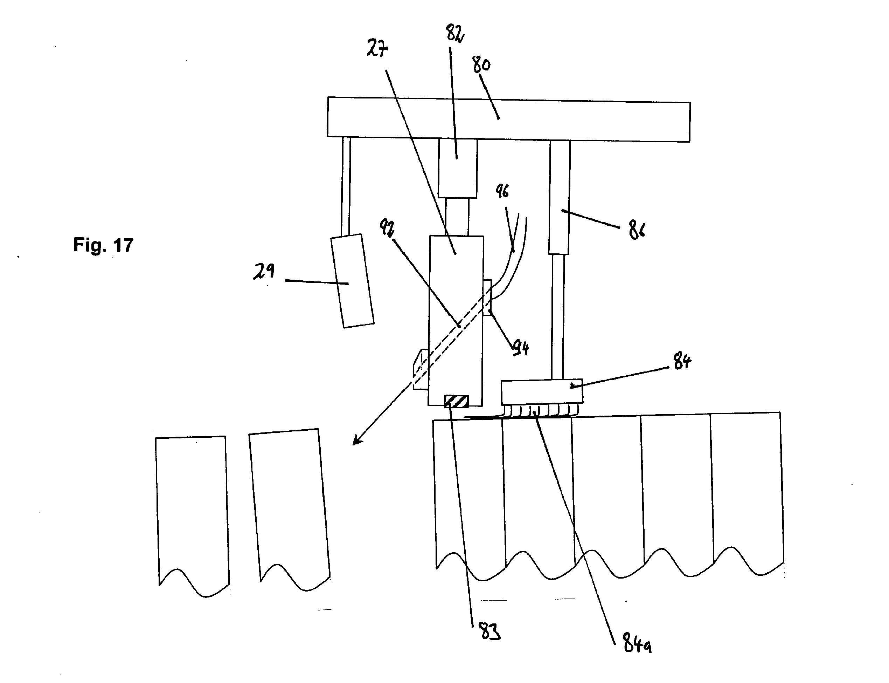

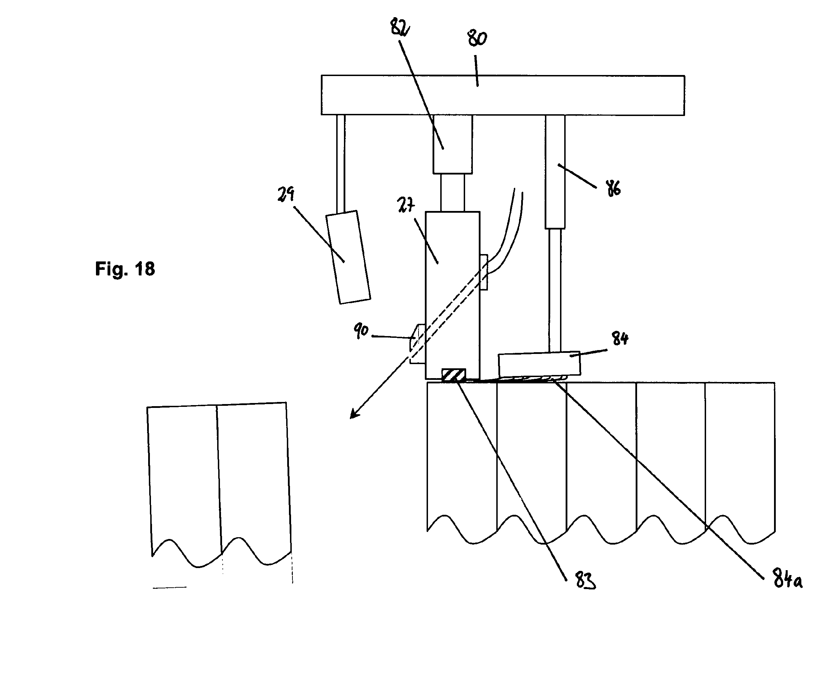

In den Figuren 17 und 18 sind weitere Einrichtungen gezeigt, welche nützlich sein können, um einen störungsfreien Betrieb der Vorrichtung zu sichern, insbesondere um ein ungewolltes Umkippen von Schnitthölzern zu verhindern. Die Figur 17 entspricht im Wesentlichen einer Teilansicht der Figur 7 im Übergangsbereich zwischen Aufstaueinheit und 10 und Paketiereinheit 30.

Es ist ein Querträger 80 dargestellt, welcher sich über die gesamte Breite der Aufstaueinheit 10 erstreckt und an welchem der Stempel 27 des Unterbrechers angeordnet ist. Ein solcher Querträger 80 ist auch in zuvor beschriebenen Ausführungsbeispielen vorgesehen, in den Zeichnungen jedoch nicht dargestellt.

Am Querträger 80 ist weiterhin eine sich stromaufwärts des Stempels befindende Bürste 84 angeordnet, deren Abstand vom Querträger 80 einstellbar ist, damit ihre Position auf unterschiedliche Breiten der Schnitthölzer eingestellt werden kann. Die Einstellbarkeit der vertikalen Position wird im gezeigten Ausführungsbeispiel durch einen teleskopierbaren Träger 86 erreicht. Zumindest ein Teil der Bürstenhaare 84a dieser Bürste84 erstreckt sich bis unter die Stempelfläche 27as des Stempels 27, so dass sie bei angehobenen Anhebeelementen 22 zwischen der Stempelfläche 27a und dem vordersten Schnittholz geklemmt sind. Hierdurch wird auch zumindest das nachfolgende Schnittholz durch Reibung gehalten und somit am Umkippen "nach hinten" gehindert, auch dann, wenn nur wenige Schnitthölzer aufgestaut sind. Statt einer Bürste 84 können auch mehrere in Y-Richtung zueinander versetzte Bürsten vorhanden sein.

Es ist weiterhin eine Druckluftdüse 90 vorhanden, die vom Stempel 27 schräg nach unten in Richtung der auf den Ketten der Paketiereinheit stehenden Schnitthözer bläst. Hierzu weist der Stempel 27 eine Durchgangsbohrung 92 auf, an deren aufstaueinheitseitigem Ende über ein Anschlussstück 94 eine flexibler Druckluftschlauch 96 angeschlossen ist. Der aus der Druckluftdüse 90 austretende Luftstrom drückt das letzte Schnittholz auf den Ketten der Paketiereinheit nach vorne und verhindert ein Kippen nach hinten.

Im Gegensatz zum oben beschriebenen ersten Ausführungsbeispiel wird bei der in den Figuren 17 und 18 gezeigten Variation der Stempel 27 des Unterbrechers während des Betriebes der Vorrichtung nicht bewegt. Seine vertikale Position ist lediglich mittels der Höhenverstelleinheit 82 einstellbar und wird so eingestellt, dass sich die Stempelfläche 27a bei abgesenkten Anhebeelementen 22 wenige Millimeter über den Schnitthölzern befindet. Es ist deshalb auch kein Anschlagblech vorgesehen. Das Unterbrechen des Schnittholzstroms erfolgt ausschließlich durch ein Anheben der Anhebeelemente 22 (in den Figuren 17 und 18 nicht zu sehen), wodurch das vorderste Schnittholz von unten gegen die Stempelfläche 27a gedrückt wird (s. Figur 18). Im gezeigten Ausführungsbeispiel weist die Stempelfläche eine Gegendruckleiste 83 auf, welche beispielsweise aus einem Hartgummi bestehen kann, wodurch die Klemmwirkung durch höhere Reibung verbessert wird.

### Bezugszeichenliste

- 5: Zuführeinheit
- 6: Zuführband
- 10: Aufstaueinheit
- 12: Aufstauband
- 14: erste Antriebsachse
- 15: erster Antriebsmotor
- 16: Antriebsrad
- 20: Anhebeeinrichtung
- 22: Anhebeelement
- 22a: Vorderseite
- 22b: Oberseite
- 24: erste Kolben-Zylinder-Einheit
- 26: Unterbrecher
- 27: Stempel
- 27a: Stempelfläche
- 28: Anschlagblech
- 29: optischer Sensor
- 30: Paketier-Einheit
- 32: Kette
- 32a: Paketierband
- 34: zweite Antriebsachse
- 35: zweiter Antriebsmotor
- 36: Antriebszahnrad
- 38: mitlaufendes Zahhrad
- 40: Anschlag
- 41: Zwischenrolle
- 42: Halteblock
- 43: Steg
- 44: starre Achse
- 45: Bolzen
- 46: Zylinderhülse
- 47: Antriebsrolle
- 48: Antriebsriemen
- 49: Buchse
- 50: Querförderer
- 52: Querrollen
- 54: Rahmen
- 56: zweite Kolben-Zylinder-Einheit
- 60: Abfuhreinheit
- 61: Führungsrolle
- 62: Abfuhrband
- 63: Abfuhrplatte
- 64: Führungsrollen
- 70: starres Übergangsteil
- 72: Anschlagschieber
- 74: Querschieber
- 80: Querträger
- 82: Höhenverstelleinheit
- 83: Gegendruckleiste
- 84: Bürste
- 84a: Bürstenhaare
- 86: teleskopiebarer Träger
- 90: Druckluftdüse
- 92: Durchgangsbohrung
- 94: Anschlussstück
- 96: Druckluftschlauch

## Patentansprüche

1. Paketiervorrichtung zur Bildung von Schnittholzpaketen mit:
- einer Aufstaueinheit (10) mit einem in eine erste Horizontalrichtung antreibbaren Aufstauförderer,
- einer der Aufstaueinheit (10) nachgeordneten Paketiereinheit (30) mit einem in der ersten Horizontalrichtung antreibbaren Paketierförderer und einem mit dem Paketierförderer verbundenen oder parallel zum Paketierförderer antreibbaren Anschlag (40),
- einem im Übergangsbereich zwischen Aufstaueinheit und Paketiereinheit angeordneten Unterbrecher (26) und
- einem im Übergangsbereich zwischen Aufstauförderer und Paketierförderer angeordneten optischen Sensor (29),
wobei Aufstauförderer und Paketierförderer in Ihrer Höhe versetzt zueinander sind und/oder unterschiedliche Neigungswinkel gegen die Horizontale haben und/oder während der Bildung eines Paketes mit unterschiedlichen Geschwindigkeiten laufen.

2. Paketiervorrichtung nach Anspruch 1, **dadurch gekennzeichnet, dass** der Unterbrecher einen oberhalb des Aufstauförderers angeordneten Stempel (27) aufweist.

3. Paketiervorrichtung nach Anspruch 2, **dadurch gekennzeichnet, dass** der Stempel in Vertikalrichtung bewegbar ist.

4. Paketiervorrichtung nach Anspruch 2, **dadurch gekennzeichnet, dass** die Vertikalposition des Stempels einstellbar ist.

5. Paketiervorrichtung nach einem der vorangehenden Ansprüche, **dadurch gekennzeichnet, dass** die Aufstaueinheit (10) mehrere Aufstaustränge (Aufstaubänder 12) aufweist.

6. Paketiervorrichtung nach einem der Ansprüche 2 bis 4 und nach Anspruch 5, **dadurch gekennzeichnet, dass** unterhalb des Stempels (27) eine Anhebeeinrichtung (20) mit Anhebeelementen (22) angeordnet ist, deren Oberseiten (22b) sich in einem ersten Betriebszustand unterhalb der Oberseite der Aufstaustränge und in einem zweiten Betriebszustand zumindest abschnittsweise oberhalb der Oberseite der Aufstaustränge befinden.

7. Paketiervorrichtung nach Anspruch 5 oder Anspruch 6, **dadurch gekennzeichnet, dass** die Aufstaustränge im Übergangsbereich über auf einer Achse (erste Antriebsachse 14) angeordnete Räder (Antriebsräder 16) geführt sind.

8. Paketiervorrichtung nach Anspruch 7, **dadurch gekennzeichnet, dass** das sich die Oberseiten (22b) der Anhebeelemente (22) bis über die Achse erstrecken.

9. Paketiervorrichtung nach Anspruch 7 oder Anspruch 8, **dadurch gekennzeichnet, dass** der Paketierförderer Paketierstränge (Ketten 32) aufweist, die im Übergangsbereich über Räder (mitlaufende Zahnräder 36) geführt sind, die auf der selben Achse angeordnet sind wie die Räder der Aufstaustränge, wobei die Räder der Paketierstränge von den Rädern der Aufstaustränge entkoppelt sind.

10. Paketiervorrichtung nach Anspruch 9, **dadurch gekennzeichnet, dass** die Räder der Paketierstränge andere Durchmesser aufweisen, als die Räder der Aufstaustränge.

11. Paketiervorrichtung nach einem der vorangehenden Ansprüche, **dadurch gekennzeichnet, dass** der Paketierförderer und/oder der Austauförderer gegen die Horizontale geneigt sind.

12. Paketiervorrichtung nach einem der vorangehenden Ansprüche, **dadurch gekennzeichnet, dass** der Paketiereinheit eine Abfuhreinheit (60) nachgeordnet ist.
